# EUROPEAN PATENT APPLICATION

(11) **EP 3 550 479 A1**
(43) Date of publication of application: **09.10.2019**
(21) Application number: 17875723.3
(22) Date of filing: 23.11.2017
(51) Int. Cl.: G06Q 10/04, G06Q 10/08, G06Q 30/06

(54) **AUGMENTED-REALITY-BASED OFFLINE INTERACTION METHOD AND APPARATUS**

(30) Priority: 30.11.2016 CN 201611089932
(71) Applicant: Alibaba Group Holding Limited, Grand Cayman (KY)
(72) Inventor: YIN, Huanmi, Zhejiang 311121 (CN)
(74) Representative: Conroy, John
(86) International application number: PCT/CN2017/112629
(87) International publication number: WO 2018/099320

(57) **Abstract**

The present application provides an augmented-reality-based offline interaction method, including: predetermining an offline user requirement of a user; searching for an offline place matching the offline user requirement of the user; determining an optimal offline place matching the offline user requirement based on a positioned location of the user uploaded by an AR client; generating navigation guide data for arriving at the optimal offline place from the positioned location of the user; and sending the navigation guide data to the AR client of the user, so that the AR client displays the navigation guide data in a real image obtained through real-time image scanning in an augmented manner, and outputs a navigation prompt to the user. In the present application, an online multiuser social mode can be seamlessly combined with an offline service based on the AR technology, to provide a new LBS service mode for the user.

## Description

### TECHNICAL FIELD

The present application relates to the field of augmented reality, and in particular, to an augmented-reality-based offline interaction method and apparatus.

### BACKGROUND

The augmented reality (AR) technology is a technology that locations and angles of images are calculated in real time, and corresponding images, videos, and 3D models are superposed on the images, to merge the virtual world with the real world, thereby providing new interaction experience for users. As the AR technology constantly develops, application scenarios of the AR technology are developing rapidly too. Therefore, how to better combine online services with offline services by using the AR technology is important for improving user experience.

### SUMMARY

The present application provides an augmented-reality-based offline interaction method (AR), applied to an AR server, where the method includes: predetermining an offline user requirement of a user; searching for an offline place matching the offline user requirement of the user; determining an optimal offline place matching the offline user requirement based on a positioned location of the user uploaded by an AR client; and generating navigation guide data for arriving at the optimal offline place from the positioned location of the user, and sending the navigation guide data to the AR client of the user, so that the AR client displays the navigation guide data in a real image obtained through real-time image scanning in an augmented manner, and outputs a navigation prompt to the user.

The present application further provides an augmented-reality-based offline interaction method, applied to an AR client, where the method includes:
uploading a positioned location of a user to an AR server; receiving navigation guide data that is sent by the AR server for arriving at an optimal offline place from the positioned location of the user, where the optimal offline place matches an offline user requirement of the user predetermined by the AR server; and in response to a real-time image scanning operation of the user, displaying the navigation guide data in a real image obtained through real-time image scanning in an augmented manner, and
outputting a navigation prompt to the user.

The present application further provides an augmented-reality-based offline interaction apparatus, applied to an AR server, where the apparatus includes: a predetermining module, configured to predetermine an offline user requirement of a user; a searching module, configured to search for an offline place matching the offline user requirement of the user; a determining module, configured to determine an optimal offline place matching the offline user requirement based on a positioned location of the user uploaded by an AR client; and a sending module, configured to generate navigation guide data for arriving at the optimal offline place from the positioned location of the user, and send the navigation guide data to the AR client of the user, so that the AR client displays the navigation guide data in a real image obtained through real-time image scanning in an augmented manner, and outputs a navigation prompt to the user.

The present application further provides an augmented-reality-based offline interaction apparatus, applied to an AR client, where the apparatus includes: an uploading module, configured to upload a positioned location of a user to an AR server; a receiving module, configured to receive navigation guide data that is sent by the AR server for arriving at an optimal offline place from the positioned location of the user, where the optimal offline place matches an offline user requirement of the user predetermined by the AR server; and a display module, configured to: in response to a real-time image scanning operation of the user, display the navigation guide data in a real image obtained through real-time image scanning in an augmented manner, and output a navigation prompt to the user.

The present application provides an offline interaction mode combining an online LBS service with an offline user requirement of a user based on the AR technology. The AR server predetermines the offline user requirement of the user, searches for the offline place matching the offline user requirement of the user, determines the optimal offline place matching the offline user requirement based on the positioned location of the user uploaded by the AR client, generates the navigation guide data for arriving at the optimal offline place from the positioned location of the user, and sends the navigation guide data to the AR client of the user, so that the AR client can display the navigation guide data in the real image obtained through real-time image scanning in an augmented manner, and output the navigation prompt to the user. Therefore, the online LBS service can be seamlessly combined with the predetermined offline user requirement of the user based on the AR technology, so as to provide a new LBS service mode for the user, thereby improving user experience and adapting to a complex offline environment.

### BRIEF DESCRIPTION OF DRAWINGS

FIG. 1 is a processing flowchart illustrating an augmented-reality-based offline interaction method, according to an implementation of the present application;
FIG. 2 is a schematic diagram illustrating an application scenario of "renting an umbrella at the nearest place", according to an implementation of the present application;
FIG. 3 is a schematic diagram illustrating another application scenario of "renting an umbrella at the nearest place", according to an implementation of the present application;
FIG. 4 is a logical block diagram illustrating an augmented-reality-based offline interaction apparatus, according to an implementation of the present application;
FIG. 5 is a structural diagram of hardware of an AR server that includes the augmented-reality-based offline interaction apparatus, according to an implementation of the present application;
FIG. 6 is a logical block diagram illustrating another augmented-reality-based offline interaction apparatus, according to an implementation of the present application; and
FIG. 7 is a structural diagram of hardware of an AR client that includes an augmented-reality-based offline interaction apparatus, according to an implementation of the present application.

### DESCRIPTION OF IMPLEMENTATIONS

The present application is intended to combine an online location based service (LBS) with an offline user requirement of a user based on the AR technology, to provide a new LBS service mode for the user.

In implementation, an AR server predetermines an offline user requirement of a user, searches for an offline place matching the offline user requirement of the user, determines an optimal offline place matching the offline user requirement based on a positioned location of the user uploaded by an AR client, generates navigation guide data for arriving at the optimal offline place from the positioned location of the user, and sends the navigation guide data to the AR client of the user, so that the AR client can display the navigation guide data in a real image obtained through real-time image scanning in an augmented manner, and output a navigation prompt to the user. Therefore, an online LBS service can be seamlessly combined with the predetermined offline user requirement of the user based on the AR technology, to provide a new LBS service mode for the user, thereby improving user experience and adapting to a complex offline environment.

For example, the offline user requirement is an offline umbrella renting service of the user. When the AR server determines, with reference to the positioned location of the user and service data such as online weather forecast, that it is about to rain at the current location of the user, and the user possibly need the umbrella renting service, the AR server can invoke an online service database (for example, map data and store data) to search for a physical store that can provide the umbrella renting service and is closest to the current location of the user, plan a guide route for the user to arrive at the physical store from the current location, and then send, to the AR client, the guide route as virtual data that needs to be displayed on the AR client in an augmented manner. The AR client displays the virtual data in an AR scenario in an augmented manner, and outputs a navigation prompt to the user. Therefore, the user can view the navigation prompt output in the AR scenario by using an AR terminal carried by the user, to quickly arrive at the nearest physical store providing the umbrella renting service.

The present application is described below with reference to specific application scenarios by using specific implementations.

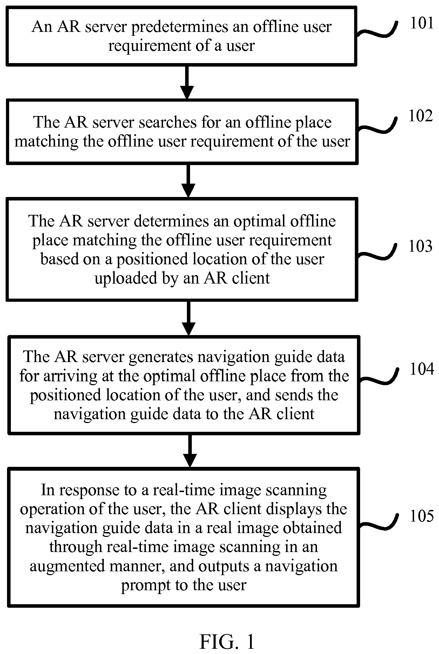

FIG. 1 illustrates an augmented-reality-based offline interaction method, according to an implementation of the present application. The method includes the following steps.

Step 101: An AR server predetermines an offline user requirement of a user.

The previous AR client is a client device developed based on the AR technology, and is configured to perform image scanning on a real scenario in an offline environment, and transmit image data obtained through scanning to the AR server in real time. In addition, a foreground AR engine of the AR client is used to visually render virtual data pushed by the background AR server, and the virtual data is superposed and merged with the image data (such as a real image) obtained by scanning the real scenario.

The AR server, including a server, a server cluster, or a cloud platform constructed based on a server cluster that provides a service for the AR client, is configured to perform, based on a background AR engine, image recognition on an image obtained through scanning by the AR client, perform content management on virtual data related to an offline service, and push the related virtual data (for example, navigation guide data) to the AR client based on a result of the image recognition.

In practice, the user can use an AR terminal (such as AR eyeglasses or an AR helmet) carried by the user, or directly use an AR client installed on a mobile terminal (such as a smartphone), to perform image scanning on any target object (which can include any object that has been defined on the server, such as a picture, a text, or a stereoscopic object) in an offline environment. After completing scanning, the AR client can upload image information obtained through scanning to the background server. The background server performs image recognition based on the background AR engine, and after successfully recognizing the target object, the background server pushes virtual data related to the target object to the AR client.

After receiving the virtual data corresponding to the target object that is pushed by the AR server, the AR client can visually render the virtual data by using the foreground AR engine to create an AR scenario model, and display the virtual data in the AR scenario model in an augmented manner, to superpose and merge an offline environment with the virtual data pushed by the AR server.

The offline user requirement can include any type of offline requirement that can be used by the AR server to push a service to the user based on an LBS.

For example, the offline user requirement can include a requirement of the user in an offline environment of arriving at the nearest physical store that provides an umbrella renting service, a restaurant recommendation requirement of arriving at the nearest restaurant to have a meal, or a requirement of the user of arriving at the nearest gas station or charging station, which are not further listed one by one in this example.

In this example, in a process that the user uses the AR client to interact with the AR server, the AR server can predetermine the offline user requirement of the user, and then push a precise LBS-based service to the user based on the predetermined offline user requirement.

When predetermining the offline user requirement of the user, the AR server can actively predetermine the offline user requirement by performing big data analysis with reference to service data stored in the background, or can predetermine the offline user requirement by recognizing image data uploaded by the AR client after the AR client performs offline image scanning.

In an implementation, in a process that the user uses the AR client to interact with the AR server, the AR server can perform big data analysis by invoking online service data related to a user requirement that is stored in the background, to predetermine the offline user requirement of the user.

The online service data can specifically include any type of online data that can represent an offline requirement of the user. For example, the online service data can specifically include map data, social data, environmental data, etc.

The online service data related to the user requirement can include service data associated with the user and service data associated with a location of the user.

For example, the data associated with the user can be online data that is stored by the AR server in the background and that is associated with identification information of the user (for example, a login account used by the user to log in to the AR client). For example, the online data associated with the user can include social data, service data, etc. of the user that are associated with the login account of the user. The data associated with the location of the user can be online data that is stored by the AR server in the background and that is associated with a positioned location of the user. For example, online data associated with a current location of the user can include weather forecast data, map data, etc.

When predetermining the offline user requirement of the user, the AR server can invoke, based on a user identifier of the user, the online data associated with the user that is stored in the background, or invoke, based on the positioned location of the user reported by the AR client, the online data associated with the positioned location of the user that is stored in the background, to perform requirement analysis based on a big data analysis method, so as to predetermine the offline user requirement of the user.

For example, in a scenario, assume that the online data associated with the positioned location of the user is weather forecast data. In this case, the AR server can determine whether it is about to rain at the current location of the user based on the positioned location of the user reported by the AR client and by performing analysis with reference to the online weather forecast data, and further predetermine whether the user currently has an offline requirement of renting an umbrella.

For another example, in another scenario, assume that the online data associated with the user is historical meal ordering data associated with account information of the user. In this case, the AR server can analyze a time rule of the user for having a meal with reference to the online historical meal ordering data of the user, and further predetermine whether the user currently has an offline requirement of having a meal with reference to a current moment.

In another implementation, in a process that the user uses the AR client to interact with the AR server, the user can actively scan a target object in an offline environment by using the AR client, and actively report image information obtained through scanning to the AR server by using the AR client, to express an offline requirement.

The target object includes any object in the offline environment that can express an offline requirement of the user.

For example, when it is about to rain outside, and the user have no rain gear, the user can actively scan any umbrella-shaped picture in the offline environment by using the AR client, and then the AR client reports the umbrella-shaped picture obtained through scanning to the AR server, to express that the user has an offline requirement of renting an umbrella.

It is worthwhile to note that in practice, to make full use of an image recognition capability of the background AR engine of the AR server, the target object can also be a graphical icon manually drawn by the user that can express an offline requirement.

For example, when it is going to rain outside, and the user have no rain gear, the user can manually draw an umbrella-shaped picture, and then actively scan the picture by using the AR client. Then the AR client reports the umbrella-shaped picture obtained through scanning to the AR server, to express that the user has an offline requirement of renting an umbrella.

In this method, user experience can be improved because the user can manually draw a graphical icon of any shape to express an offline user requirement to the AR server.

In this example, the AR server can predefine several predetermined objects, and associate a corresponding offline user requirement with each defined predetermined object.

For example, predetermined objects that can be predefined by the AR server can include an umbrella-shaped picture, a tableware-shaped picture, a battery-shaped picture, etc. The umbrella-shaped picture can be pre-associated with an offline user requirement of "rent an umbrella at the nearest place", the tableware picture can be pre-associated with an offline user requirement of "having a meal at the nearest place", and the battery picture can be pre-associated with an offline user requirement of "charging at the nearest place". Certainly, the enumerated predetermined objects are only examples. In practice, a person skilled in the art can customize a predetermined object based on a type of an offline requirement of the user.

The AR client performs image scanning on the target object and uploads image information corresponding to the target object. Then, after receiving the image information corresponding to the target object that is uploaded by the AR client, the AR server can perform image recognition on the image information based on a predetermined image recognition algorithm.

A type of the image recognition algorithm is not specially limited in this example. A person skilled in the art can reference records in related technologies when implementing the technical solutions of the present application. For example, in implementation, the image recognition algorithm can be a neural network algorithm most widely used in the AR technology. An image recognition model can be constructed on the AR server based on the neural network algorithm to perform image recognition on the received image data.

When successfully recognizing the target object from the received image data, the AR server can match the target object with the customized predetermined objects to further determine whether the recognized target object is a predetermined object.

If the recognized target object is the predetermined object, because the predefined predetermined object has been associated with a corresponding offline user requirement, the AR server can directly determine the offline user requirement associated with the predetermined object as the offline user requirement of the user.

For example, if the user uses the AR client to scan a manually-drawn umbrella-shaped picture to express an offline requirement of "renting an umbrella at the nearest place", when successfully recognizing that the picture is an umbrella-shaped picture, the AR server can directly determine that the offline requirement expressed by the user is "renting an umbrella at the nearest place", and respond to the requirement of the user, to invoke offline map data to search for a physical store that provides an umbrella renting service and that is closest to a current location of the user.

It is worthwhile to note that when different users express offline user requirements to the AR server by using manually-drawn graphical icons, even if offline user requirements expressed by different users are the same, there are some obvious differences between graphical icons drawn by the users. Therefore, after successfully recognizing, by using the predetermined image recognition algorithm, that a manually-drawn graphical icon uploaded by the AR client is the present object, and predetermining an offline service requirement of the user, the AR server can establish an association relationship between the manually-drawn graphical icon and the offline service requirement.

In this method, the AR server can collect graphical icons scanned by users by using the AR client, and establish an association relationship between the graphical icons and recognition results corresponding to the graphical icons, to constantly perfect the predefined predetermined objects. Therefore, when the user expresses an offline requirement to the AR client by scanning a manually-drawn graphical icon by using the AR client, the AR server can learn of the offline requirement of the user by matching the graphical icon manually drawn by the user with the predetermined objects, without recognizing the graphical icon manually drawn by the user by using the predetermined image recognition algorithm, so as to improve accuracy of recognizing the icon manually drawn by the user, and alleviate a problem that an offline user requirement of the user cannot be predetermined because a recognition error possibly occur due to a difference between graphical icons manually drawn by different users.

In this example, when successfully predetermining the offline service requirement of the user, the AR server can further push a predetermination result to the AR client of the user. After receiving the predetermination result pushed by the AR server, the AR client of the user can display the predetermination result to the user in an AR scenario. The user acknowledges the predetermination result, and the AR client feeds back an acknowledgement result of the user to the AR server.

For example, if the AR server predetermines, with reference to a current positioned location of the user and online weather forecast data, that the user has an offline requirement of "renting an umbrella at the nearest place", the AR server can push prompt information "it is about to rain, and whether there is a need to go to the nearest umbrella?" to the AR client, and the AR client outputs the prompt information to the user in an AR scenario. When outputting the prompt information to the user in the AR scenario, the AR client can further provide two user options, that is, "Yes" and "No", for the user to select for acknowledgement. The user can select "Yes" and "No" in the AR scenario to acknowledge the prompt information, and then the AR client feeds back a result of the user's selection for acknowledgement to the AR server.

Step 102: The AR server searches for an offline place matching the offline user requirement of the user.

In this example, after predetermining the offline user requirement of the user, the AR server can invoke online map data integrating information about offline places to search for the offline place matching the offline user requirement of the user.

For example, if the AR server predetermines that the user has an offline requirement of "renting an umbrella at the nearest place", the AR server can invoke online map data integrating information about offline physical stores to search for a physical store that provides an umbrella renting service and that is closest to a current location of the user.

Step 103: The AR server determines an optimal offline place matching the offline user requirement based on a positioned location of the user uploaded by an AR client.

In this example, the AR client can position a location of the user in real time, and upload the positioned location of the user to the AR server in real time. After receiving the positioned location uploaded by the AR client, the AR server can find the optimal offline place from found offline places that can match the offline user requirement of the user.

In an implementation, the optimal offline place can be an offline place that matches the offline user requirement of the user and that is closest to a current location of the user.

In this case, the AR server can use the positioned location of the user reported by the AR client as a reference to search the offline places matching the offline service requirement of the user for an offline place closest to the current location of the user, and use the offline place as the optimal offline place.

Certainly, in addition to determining the optimal offline place based on a distance between the current location of the user and the offline place as a reference, other factors can also be comprehensively considered in practice. For example, whether the found offline place is the optimal offline place is measured by whether the user frequently visits the offline place and factors such as user satisfaction and user habits.

For example, the offline user requirement is "having a meal at the nearest place", and the offline place is a restaurant near the user. In this case, when the optimal offline place is determined, whether the user frequently visits the restaurant, user satisfaction, taste habits of the user, etc. can be comprehensively considered, instead of determining a restaurant closest to the user as an optimal restaurant.

Step 104: The AR server generates navigation guide data for arriving at the optimal offline place from the positioned location of the user, and sends the navigation guide data to the AR client.

In this example, after determining the optimal offline place for the user, the AR server can invoke offline map data to generate the navigation guide data for the user to arrive at the optimal offline place from the positioned location of the user.

The navigation guide data can be navigation data generated after the AR server performs integration with reference to a three-dimensional image (for example, a street scene image) on a route for arriving at the optimal offline place from the positioned location of the user.

After the AR server generates, for the user based on the positioned location of the user, the navigation guide data for arriving at the optimal offline place from the positioned location of the user, if the user acknowledges the predetermination result output in the AR scenario by using the AR client, the AR server can use the navigation guide data as virtual data exchanged between the AR server and the AR client in real time, and send the virtual data to the AR client.

Step 105: In response to a real-time image scanning operation of the user, the AR client displays the navigation guide data in a real image obtained through real-time image scanning in an augmented manner, and outputs a navigation prompt to the user.

In this example, after the user acknowledges the predetermination result output in the AR scenario by using the AR client, the user can perform real-time image scanning on the offline environment by using the AR client. In addition, after receiving the navigation guide data sent by the AR server, the AR client can visually render, based a foreground AR engine, the navigation guide data pushed by the background AR server to create an AR scenario model, display the navigation guide data in the AR scenario model in an augmented manner, output the navigation guide data to the user by using the AR client of the user or an AR terminal carried by the user, and output the navigation prompt to the user in the AR scenario. In this case, under the guidance of the navigation prompt output in a field of view of the user, the user can quickly arrive at the optimal offline place.

It can be seen that in this method, the AR server collects online service data and image data that is generated through daily scanning performed by the user based on the AR client. The AR server predetermines the offline requirement of the user, searches for the optimal offline place matching the offline requirement of the user based on the online service data to generate the navigation guide data, models an AR scenario based on navigation guide data generated using the AR technology, and outputs the navigation guide data to the user, so that the user can be guided to the optimal offline place that can match the offline requirement of the user. Therefore, an online LBS service can be seamlessly combined with the predetermined offline user requirement of the user based on the AR technology, to provide a new LBS service mode for the user, thereby improving user experience and adapting to a complex offline environment.

The technical solutions in the present application are described below in detail with reference to specific application scenarios.

In this example, an example that the offline user requirement is "renting an umbrella at the nearest place" is used for description.

In this scenario, if it is about to rain at a current location of the user, the user can manually draw an umbrella-shaped graphical icon, actively scan the graphical icon by using an AR client installed on an AR terminal carried by the user, and upload image information corresponding to the graphical icon that is obtained through scanning to the AR server, to express, to the AR server, the offline user requirement of "renting an umbrella at the nearest place".

The AR server side can predefine the umbrella-shaped graphical icon, and associate graphical icon with the offline user requirement of "renting an umbrella at the nearest place". After receiving the image information uploaded by the AR client, the AR server can recognize the image information by using an algorithm.

In one aspect, after successfully recognizing that the image information matches the predefined umbrella-shaped graphical icon, the AR server can determine "renting an umbrella at the nearest place" as a current offline user requirement of the user, and push prompt information "whether there is a need to go to the nearest umbrella?" to the AR client of the user.

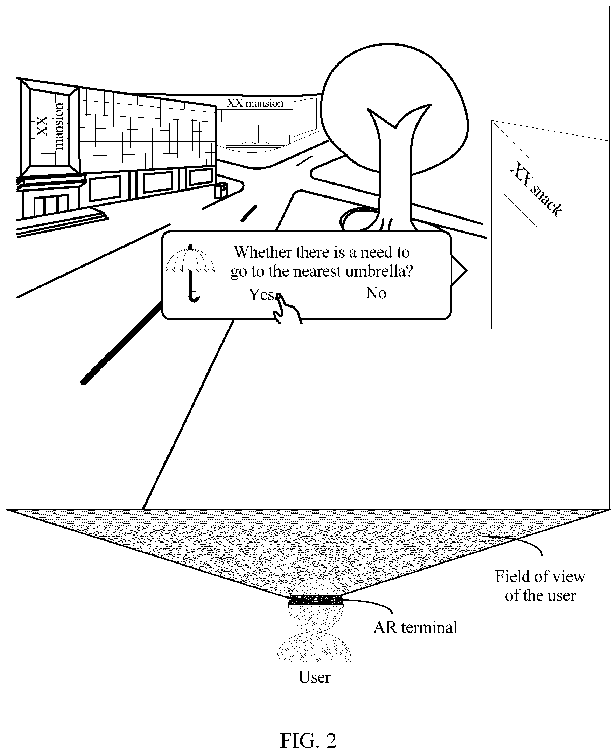

Referring to FIG. 2, after receiving the prompt information "whether there is a need to go to the nearest umbrella?" pushed by the AR server, the AR client of the user can output the prompt information to the user in an AR scenario, and provide two user options, that is, "Yes" and "No", for the user to select for acknowledgement. In this case, the user can select "Yes" to trigger the AR client to start real-time scanning on a real image.

In another aspect, after successfully recognizing that the image information matches the predefined umbrella-shaped graphical icon, the AR server can invoke online map data to search all physical stores that can provide an umbrella renting service near the current location of the user, to determine a physical store closest to the current location of the user, generate navigation guide data based on a street scene picture of a route for arriving at the physical store from the current location of the user, and send the navigation guide data to the AR client.

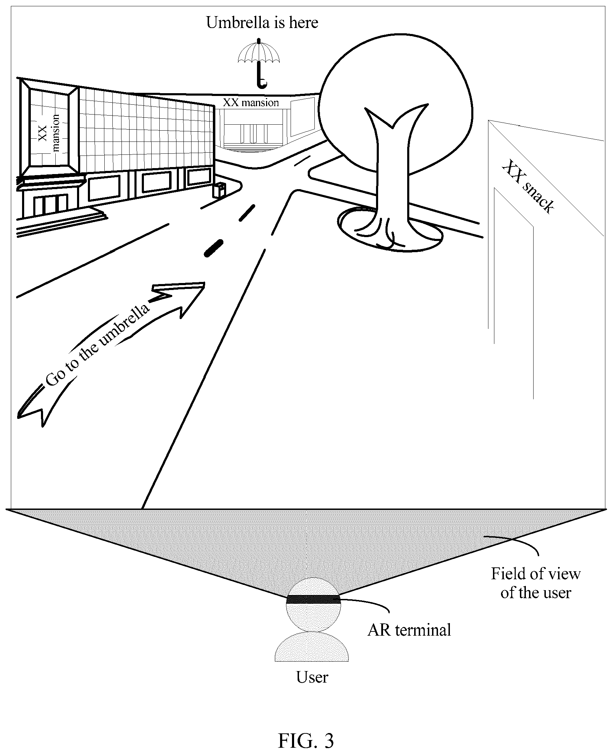

Referring to FIG. 3, after receiving the navigation guide data sent by the AR server, the AR client can visually render the navigation guide data based on a foreground AR engine to create an AR scenario model for renting an umbrella, display the navigation guide data in the AR scenario model in an augmented manner, output the navigation guide data to the user by using the AR terminal carried by the user, and output a navigation prompt to the user in the AR scenario.

As shown in FIG. 3, the navigation prompt can specifically include a guide arrow that is displayed in a real image scanned by the AR client and that is for arriving at the nearest physical store that provides an umbrella renting service, and a virtual umbrella icon indicating "umbrella is here" displayed above a picture of the physical store in an augmented manner. The AR client installed on the AR terminal carried by the user can interact with the AR server in real time, and constantly update the navigation prompt based on a change in the location of the user, so as to guide the user to quickly arrive at the nearest physical store providing an umbrella renting service to borrow an umbrella.

It is worthwhile to note that in the previous implementation, the example that the offline user requirement "renting an umbrella at the nearest place" is used for description. Apparently, the technical solution shown in step 101 to step 105 can also be applied to an application scenario corresponding to another offline requirement of the user similar to this offline requirement.

For example, in an application scenario of "having a meal at the nearest place", the user can manually draw a tableware-shaped graphical icon, actively scan the graphical icon by using the AR client installed on the AR terminal carried by the user, and upload image information corresponding to the graphical icon that is obtained through scanning to the AR server, to express, to the AR server, the offline user requirement of "having a meal at the nearest place". After predetermining the offline requirement of the user by recognizing the image information uploaded by the AR client, the AR server can search for a restaurant closest to the user, generate navigation guide data for the user to arrive at the nearest restaurant from the current location of the user, send the navigation guide data to the AR client for display in the AR scenario in an augmented manner, and output a navigation prompt to the user in the AR scenario, so as to guide the user to go to the restaurant.

For another example, in another application scenario of "charging at the nearest place", the user can manually draw a battery-shaped graphical icon, actively scan the graphical icon by using the AR client installed on the AR terminal carried by the user, and upload image information corresponding to the graphical icon that is obtained through scanning to the AR server, to express, to the AR server, the offline user requirement of "charging at the nearest place". After predetermining the offline requirement of the user by recognizing the image information uploaded by the AR client, the AR server can search for a charging station closest to the user, generate navigation guide data for the user to arrive at the nearest charging station from the current location of the user, send the navigation guide data to the AR client for display in the AR scenario in an augmented manner, and output a navigation prompt to the user in the AR scenario, so as to guide the user to go to the charging station to charge an electric vehicle driven by the user.

In this example, application scenarios to which the present application is applicable are not enumerated one by one.

It can be seen from the previous implementations that an offline interaction mode combining an online LBS service with an offline user requirement of a user based on the AR technology is provided. The AR server predetermines the offline user requirement of the user, searches for the offline place matching the offline user requirement of the user, determines the optimal offline place matching the offline user requirement based on the positioned location of the user uploaded by the AR client, generates the navigation guide data for arriving at the optimal offline place from the positioned location of the user, and sends the navigation guide data to the AR client of the user, so that the AR client can display the navigation guide data in the real image obtained through real-time image scanning in an augmented manner, and output the navigation prompt to the user. Therefore, the online LBS service can be seamlessly combined with the predetermined offline user requirement of the user, to provide a new LBS service mode for the user, thereby improving user experience and adapting to a complex offline environment.

The present application further provides an apparatus implementation corresponding to the previous method implementation.

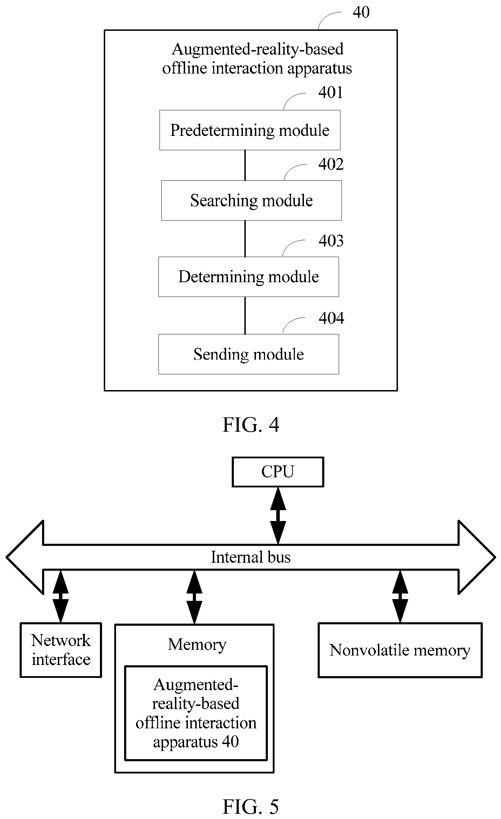

Referring to FIG. 4, the present application provides augmented-reality-based offline interaction apparatus 40, and the apparatus 40 is applied to an AR server. Referring to FIG. 5, a hardware architecture of an AR server that includes the augmented-reality-based offline interaction apparatus 40 usually includes a CPU, a memory, a nonvolatile memory, a network interface, an internal bus, etc. For example, in a software implementation, the augmented-reality-based offline interaction apparatus 40 can usually be understood as a logical apparatus that combines software and hardware after a computer program loaded in the memory runs in the CPU. The apparatus 40 includes: a predetermining module 401, configured to predetermine an offline user requirement of a user; a searching module 402, configured to search for an offline place matching the offline user requirement of the user; a determining module 403, configured to determine an optimal offline place matching the offline user requirement based on a positioned location of the user uploaded by an AR client; and a sending module 404, configured to generate navigation guide data for arriving at the optimal offline place from the positioned location of the user, and send the navigation guide data to the AR client of the user, so that the AR client displays the navigation guide data in a real image obtained through real-time image scanning in an augmented manner, and outputs a navigation prompt to the user.

In this example, the predetermining module 401 is configured to: invoke service data associated with the user; or invoke service data associated with the positioned location of the user; and perform big data analysis on the invoked service data to determine the offline user requirement of the user.

In this example, the predetermining module 401 is configured to: receive image information corresponding to a target object in an offline environment that is uploaded by the AR client after the AR client performs image scanning on the target object; perform image recognition on the image information based on a predetermined image recognition algorithm, and determine whether the recognized target object is a predetermined object, where the predetermined object is associated with a corresponding offline user requirement; and determine the offline user requirement associated with the predetermined object as the offline user requirement of the user if the target object is the predetermined object.

In this example, the target object is a graphical icon manually drawn by the user.

The predetermining module 401 is further configured to: establish an association relationship between the target object and the offline user requirement if it is recognized that the target object is the predetermined object.

In this example, the optimal offline place is an offline place that matches the offline user requirement and that is closest to the positioned location of the user.

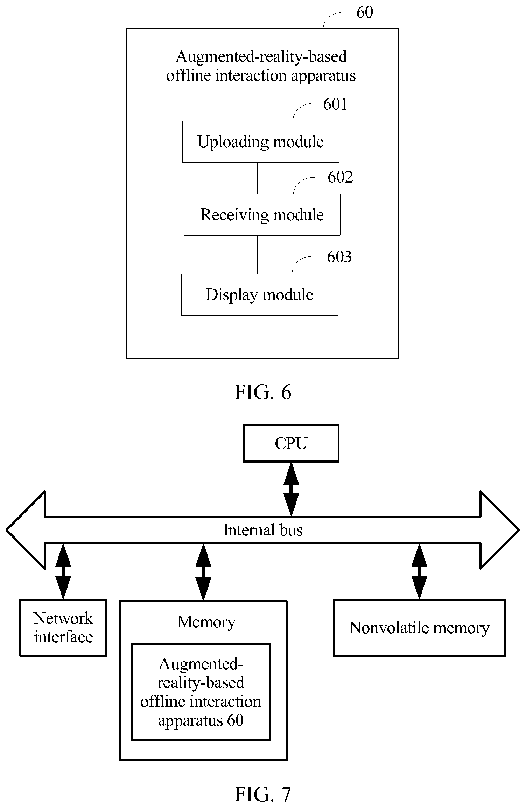

Referring to FIG. 6, the present application provides augmented-reality-based offline interaction apparatus 60, and the apparatus 60 is applied to an AR client. Referring to FIG. 7, a hardware architecture of an AR client that includes the augmented-reality-based offline interaction apparatus 60 usually includes a CPU, a memory, a nonvolatile memory, a network interface, an internal bus, etc. For example, in software implementation, the augmented-reality-based offline interaction apparatus 60 can usually be understood as a logical apparatus that combines software and hardware after a computer program loaded in the memory runs in the CPU. The apparatus 60 includes: an uploading module 601, configured to upload a positioned location of a user to an AR server; a receiving module 602, configured to receive navigation guide data that is sent by the AR server for arriving at an optimal offline place from the positioned location of the user, where the optimal offline place matches an offline user requirement of the user predetermined by the AR server; and a display module 603, configured to: in response to a real-time image scanning operation of the user, display the navigation guide data in a real image obtained through real-time image scanning in an augmented manner, and output a navigation prompt to the user.

In this example, the uploading module 601 is further configured to: in response to an image scanning operation performed by the user on a target object in an offline environment, upload image information corresponding to the target object that is obtained through scanning to the AR server, so that the AR server predetermines the offline user requirement of the user after performing image recognition on the image information.

In this example, the target object is a graphical icon manually drawn by the user.

Because an apparatus implementation basically corresponds to a method implementation, for related parts, references can be made to related descriptions in the method implementation. The previously described apparatus implementation is merely an example. The units described as separate parts may or may not be physically separate, and parts displayed as units may or may not be physical units, may be located in one position, or may be distributed on a plurality of network units. Some or all of the modules can be selected based on actual needs to achieve the objectives of the solutions in the present application. A person of ordinary skill in the art can understand and implement the implementations of the present application without creative efforts.

The system, apparatus, module, or unit illustrated in the previous implementations can be implemented by using a computer chip or an entity, or can be implemented by using a product having a certain function. A typical implementation device is a computer, and the computer can be a personal computer, a laptop computer, a cellular phone, a camera phone, a smartphone, a personal digital assistant, a media player, a navigation device, an email receiving and sending device, a game console, a tablet computer, a wearable device, or any combination of these devices.

A person skilled in the art can easily figure out another implementation solution of the present application after considering the present specification and practicing the present disclosure here. The present application is intended to cover any variations, functions, or adaptive changes of the present application. These variations, functions, or adaptive changes comply with general principles of the present application, and include common knowledge or a commonly used technical means in the technical field that is not disclosed in the present application. The present specification and the implementations are merely considered as examples. The actual scope and the spirit of the present application are pointed out by the following claims.

It should be understood that the present application is not limited to the accurate structures described above and shown in the accompanying drawings, and various modifications and changes can be made without departing from the scope of the present application. The scope of the present application is limited only by the appended claims.

The previous descriptions are merely examples of implementations of the present application, but are not intended to limit the present application. Any modification, equivalent replacement, or improvement made without departing from the spirit and principle of the present application shall fall within the protection scope of the present application.

## Claims

1. An augmented-reality-based offline interaction method (AR), applied to an AR server, wherein the method comprises:
predetermining an offline user requirement of a user;
searching for an offline place matching the offline user requirement of the user;
determining an optimal offline place matching the offline user requirement based on a positioned location of the user uploaded by an AR client;
generating navigation guide data for arriving at the optimal offline place from the positioned location of the user; and
sending the navigation guide data to the AR client of the user, so that the AR client displays the navigation guide data in a real image obtained through real-time image scanning in an augmented manner, and outputs a navigation prompt to the user.

2. The method according to claim 1, wherein the predetermining an offline user requirement of a user comprises:
invoking service data associated with the user; or
invoking service data associated with the positioned location of the user; and
performing big data analysis on the invoked service data to determine the offline user requirement of the user.

3. The method according to claim 1, wherein the predetermining an offline user requirement of a user comprises:
receiving image information corresponding to a target object in an offline environment that is uploaded by the AR client after the AR client performs image scanning on the target object;
performing image recognition on the image information based on a predetermined image recognition algorithm, and determining whether the recognized target object is a predetermined object, wherein the predetermined object is associated with a corresponding offline user requirement; and
determining the offline user requirement associated with the predetermined object as the offline user requirement of the user if the target object is the predetermined object.

4. The method according to claim 3, wherein the target object is a graphical icon manually drawn by the user; and
wherein the method further comprises:
establishing an association relationship between the target object and the offline user requirement in response to determining that the target object is the predetermined object.

5. The method according to claim 1, wherein the optimal offline place is an offline place that matches the offline user requirement and that is closest to the positioned location of the user.

6. An augmented-reality-based offline interaction method, applied to an AR client, wherein the method comprises:
uploading a positioned location of a user to an AR server;
receiving navigation guide data that is sent by the AR server for arriving at an optimal offline place from the positioned location of the user, wherein the optimal offline place matches an offline user requirement of the user predetermined by the AR server; and
in response to a real-time image scanning operation of the user, displaying the navigation guide data in a real image obtained through real-time image scanning in an augmented manner, and outputting a navigation prompt to the user.

7. The method according to claim 6, wherein the method further comprises:
in response to an image scanning operation performed by the user on a target object in an offline environment, uploading image information corresponding to the target object that is obtained through scanning to the AR server, so that the AR server predetermines the offline user requirement of the user after performing image recognition on the image information.

8. The method according to claim 6, wherein the target object is a graphical icon manually drawn by the user.

9. An augmented-reality-based offline interaction apparatus, applied to an AR server, wherein the apparatus comprises:
a predetermining module, configured to predetermine an offline user requirement of a user;
a searching module, configured to search for an offline place matching the offline user requirement of the user;
a determining module, configured to determine an optimal offline place matching the offline user requirement based on a positioned location of the user uploaded by an AR client; and
a sending module, configured to:
generate navigation guide data for arriving at the optimal offline place from the positioned location of the user, and
send the navigation guide data to the AR client of the user, so that the AR client displays the navigation guide data in a real image obtained through real-time image scanning in an augmented manner, and outputs a navigation prompt to the user.

10. The apparatus according to claim 9, wherein the predetermining module is configured to:
invoke service data associated with the user; or
invoke service data associated with the positioned location of the user; and
perform big data analysis on the invoked service data to determine the offline user requirement of the user.

11. The apparatus according to claim 9, wherein the predetermining module is configured to:
receive image information corresponding to a target object in an offline environment that is uploaded by the AR client after the AR client performs image scanning on the target object;
perform image recognition on the image information based on a predetermined image recognition algorithm, and determine whether the recognized target object is a predetermined object, wherein the predetermined object is associated with a corresponding offline user requirement; and
determine the offline user requirement associated with the predetermined object as the offline user requirement of the user if the target object is the predetermined object.

12. The apparatus according to claim 11, wherein the target object is a graphical icon manually drawn by the user; and
wherein the predetermining module is further configured to:
establish an association relationship between the target object and the offline user requirement in response to determining that the target object is the predetermined object.

13. The apparatus according to claim 9, wherein the optimal offline place is an offline place that matches the offline user requirement and that is closest to the positioned location of the user.

14. An augmented-reality-based offline interaction apparatus, applied to an AR client, wherein the apparatus comprises:
an uploading module, configured to upload a positioned location of a user to an AR server;
a receiving module, configured to receive navigation guide data that is sent by the AR server for arriving at an optimal offline place from the positioned location of the user, wherein the optimal offline place matches an offline user requirement of the user predetermined by the AR server; and
a display module, configured to:
in response to a real-time image scanning operation of the user, display the navigation guide data in a real image obtained through real-time image scanning in an augmented manner, and
output a navigation prompt to the user.

15. The apparatus according to claim 14, wherein the uploading module is further configured to:
in response to an image scanning operation performed by the user on a target object in an offline environment, upload image information corresponding to the target object that is obtained through scanning to the AR server, so that the AR server predetermines the offline user requirement of the user after performing image recognition on the image information.

16. The apparatus according to claim 14, wherein the target object is a graphical icon manually drawn by the user.
